# EUROPÄISCHE PATENTSCHRIFT

(11) **EP 0 745 798 B1**
(45) Veröffentlichungstag und Bekanntmachung des Hinweises auf die Patenterteilung: **11.09.2002**
(21) Anmeldenummer: 96107662.7
(22) Anmeldetag: 14.05.1996
(51) Int. Cl.: F16K 31/60

(54) **Stellgriff einer Sanitärarmatur**
Handle for a sanitary valve
Poignée pour robinet sanitaire

(30) Priorität: 31.05.1995 DE 19519816
(43) Veröffentlichungstag der Anmeldung: 04.12.1996
(73) Patentinhaber: Friedrich Grohe AG & Co. KG, 58675 Hemer (DE)
(72) Erfinder: Heimann, Bruno, 58730 Fröndenberg (DE); Köster, Wilfried, 58710 Menden (DE); Lobermeier, Hans, 58708 Menden (DE); Hochstein, Detlef, 58675 Hemer (DE)

(56) Entgegenhaltungen:
- EP-A- 0 179 433
- WO-A-94/29623
- DE-A- 2 013 157
- DE-A- 2 148 967
- US-A- 5 236 006
- US-A- 5 326 075

## Beschreibung

Die Erfindung betrifft ein Wasserventil für den Sanitärbereich mit einem Stellgriff, der an einer aus einem Ventilgehäuse herausgeführten, drehbaren Ventilspindel befestigt ist, und der einen Festanschlag aufweist, welcher mit wenigstens einem, an dem Ventilgehäuse angeordneten Anschlag zusammenwirkt, wobei am Stellgriff ein weiterer, nach außen verdeckt angeordneter und aus seiner Anschlagposition lösbarer Anschlag vorgesehen ist.
Stellgriffe dieser Art werden sowohl zur Temperatureinstellung bei Mischventilen für Kalt- und Warmwasser zur Begrenzung der einstellbaren Temperatur als auch bei Mengenregulierventilen zur Begrenzung der maximalen Durchflußmenge eingesetzt. Die bekannten steligriffe sind hierbei meist mit festen Anschlägen zur Drehwinkelbegrenzung versehen. Außerdem ist es bekannt, insbesondere bei Stellgriffen für die Temperatureinstellung, eine vom Benutzer betätigbare Anschlagtaste vorzusehen, mit der die Drehbegrenzung entriegelt werden kann.
Aus der Druckschrift EP-A-179 433 oder US-A-5 326 075 war jeweils bereits eine verdeckt angeordnete lösbare Anschlagausbildung an einem Stellgriff eines Wassermischventils zur einstellbaren Begrenzung der maximalen Mischwassertemperatur bekannt. Hierbei ist der lösbare Anschlag einstückig mit einem in verschiedenen Drehstellungen in den Stellgriff steckbaren Tragkörper ausgebildet, so daß nach einer Lösung oder Entnahme des Tragkörpers und eine anschließende Betätigung des Stellgriffs bei dem darauf vorzunehmenden Wiedereinbau eine erneute, Zeit erfordernde Justierung der maximalen Mischwassertemperatur mit dem am Tragkörper ausgebildeten Anschlag vorzunehmen ist.

In jüngerer Zeit wird zunehmend festgestellt, daß beim Betrieb von Warmwasserarmaturen und Warmwasseranlagen eine Verkeimung mit Legionellen etc. auftreten kann, so daß eine thermische Desinfektion in regelmäßigen Abständen wünschenswert ist. Stellgriffe mit festen Anschlägen für die Drehwinkelbegrenzung bei Mischventilen lassen keine erhöhte Temperatureinstellung für eine thermische Desinfektion zu bzw. müssen hierzu demontiert werden. Stellgriffe mit einer lösbaren Anschlagtaste bieten dagegen nur einen begrenzten Verbrühungsschutz, da diese Drehwinkelbegrenzung von jeweiligen Benutzern ohne weiteres entriegelt werden kann, während lösbare Anschlagausbildungen nach einer Entriegelung anschließend wieder auf die maximal einstellbare Temperatur justiert werden müssen.

Der Erfindung liegt die Aufgabe zugrunde, einen verbesserten Stellgriff zu schaffen, bei dem eine Drehwinkelbegrenzung vorgesehen ist, die mit relativ einfachen, dem Normalbenutzer jedoch nicht ersichtlichen, beispielsweise vom Hausmeister oder einem anderen Fachmann vorzunehmenden Maßnahmen einfach entriegelt und erneut verriegelt werden kann.

Diese Aufgabe wird erfindungsgemäß mit den Merkmalen des Anspruchs 1 oder des Anspruchs 2 gelöst.
Weitere Ausgestaltungen der Erfindung sind in den Ansprüchen 3 bis 12 angegeben.

Die mit der Erfindung erzielbaren Vorteile bestehen insbesondere darin, daß der vorgeschlagene Stellgriff sowohl als Temperatureinstellgriff mit Drehwinkelbegrenzung an einem Thermostatmischventil als auch als Mengenstellgriff mit Drehwinkelbegrenzung bei einem Mengenregulierventil einsetzbar ist. In beiden Fällen ist eine Entriegelung der Drehwinkelbegrenzung nur für den Fachmann möglich, da die Entriegelungsmöglichkeit für den Normalbenutzer nicht zugänglich, bzw. nicht sichtbar ist. Darüber hinaus ermöglicht der erfindungsgemäße Stellgriff eine geschlossene und auch gegen Vandalismus sichere Ausbildung. Dabei ist die Entriegelung für den Fachmann einfach auszuführen, wobei eine unbeabsichtigte Verstellung der vorjustierten Anschläge nicht erfolgen kann.
Die Entriegelung der Drehwinkelbegrenzung kann insbesondere für eine thermische Desinfektion von sanitären Wasserleitungsanlagen eingesetzt werden, wobei die Entriegelung bei dem Stellgriff für die Temperatur am Mischventil die erforderliche hohe Temperatur des für die Desinfektion erforderlichen Wassers erlaubt und die Entriegelung bei dem Stellgriff für das Mengenregulierventil die ausreichend große Wassermenge pro Zeiteinheit ermöglicht.

In weiterer Ausgestaltung der Erfindung kann als lösbarer Anschlag eine, aus dem Griffstück herausnehmbare Anschlaglasche vorgesehen werden, die nur nach einer Abnahme eines äußeren Teils bzw. Kappe des Stellgriffs aus dem Griffstück entfernbar ist, und dadurch die Drehwinkelbegrenzung entriegelt.
Alternativ können bei dem Stellgriff auch zwei aufeinander angeordnete Hülsen angeordnet sein, wobei die äußere Hülse einen parallel zur Mittelachse verlaufenden, sich ins Innere erstreckenden Anschlagwulst trägt, der durch einen entsprechenden Längsschlitz der inneren Hülse hindurchfaßt und mit dem am Ventilgehäuse ausgebildeten Anschlag zusammenwirkt. Durch ein axiales Abziehen der äußeren Hülse, nachdem eine entsprechende Verrastung oder Verschraubung gelöst worden ist, kann somit in einfacher Weise die Drehwinkelbegrenzung entriegelt werden.
Vorteilhaft kann der an dem Ventilgehäuse vorgesehene Anschlag, mit dem der lösbare Anschlag zusammenwirkt, justierbar ausgebildet werden. Hierbei kann der Anschlag zweckmäßig an einem Ringelement angeformt werden, welches mittels einer Verzahnung fein gestuft, in verschiedenen Drehstellungen auf das Ventilgehäuse aufsteckbar ist. Eine Justierung dieses Anschlags ist jedoch nur möglich, wenn das Griffstück bzw. die beiden Hülsen von der Ventilspindel abgenommen sind. Bei der Entriegelung der Drehwinkelbegrenzung wird dagegen lediglich ein äußerer Teil des Griffstücks, bzw. die äußere Hülse des Stellgriffs entfernt, so daß hierbei der auf dem Ringelement angeordnete Anschlag für eine Justierung nicht zugängig ist.

Ausführungsbeispiele der Erfindung sind in der Zeichnung dargestellt und werden im folgenden näher beschrieben. Es zeigt
- Figur 1: eine zum Teil dargestellte Wassermischarmatur mit einem Stellgriff in Perspektivdarstellung;
- Figur 2: den in Figur 1 gezeigten Stellgriff in der Schnittebene II in vergrößerter Darstellung;
- Figur 3: die in Figur 1 gezeigte Wassermischarmatur mit dem Stellgriff, wobei der äußere Teil, bzw. die Kappe und eine Anschlaglasche von dem Griffstück abgezogen dargestellt sind;
- Figur 4: die in Figur 1 gezeigte Wassermischarmatur mit auseinandergezogenen Einzelteilen des Stellgriffs in Perspektivdarstellung;
- Figur 5: eine andere zum Teil dargestellte Wassermischarmatur mit einem Stellgriff in Perspektivdarstellung;
- Figur 6: den in Figur 5 gezeigten Stellgriff in der Schnittebene VI in vergrößerter Darstellung;
- Figur 7: die in Figur 5 gezeigte Wassermischarmatur mit vom Stellgriff abgezogener äußerer Hülse in Perspektivdarstellung;
- Figur 8: die in Figur 5 dargestellte Wassermischarmatur mit abgezogener äußerer und innerer Hülse.

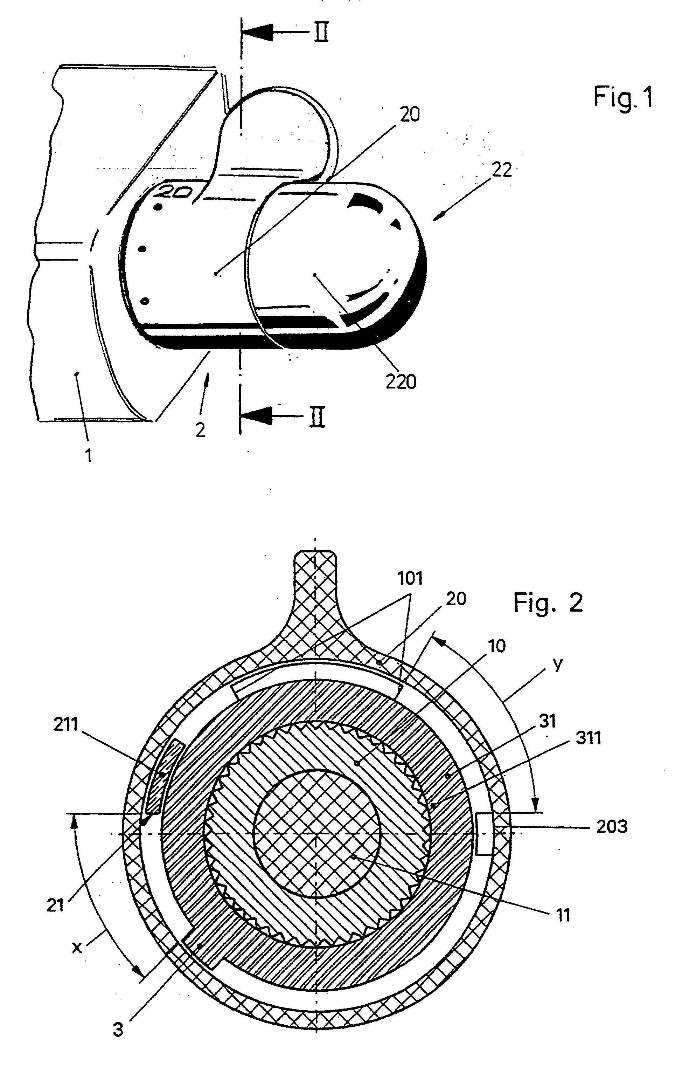

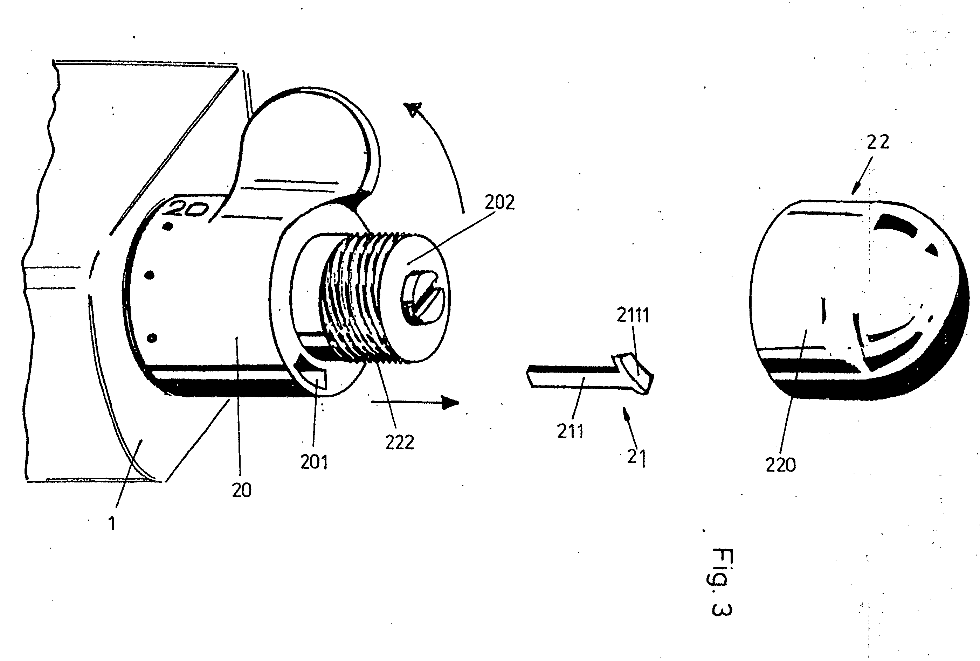

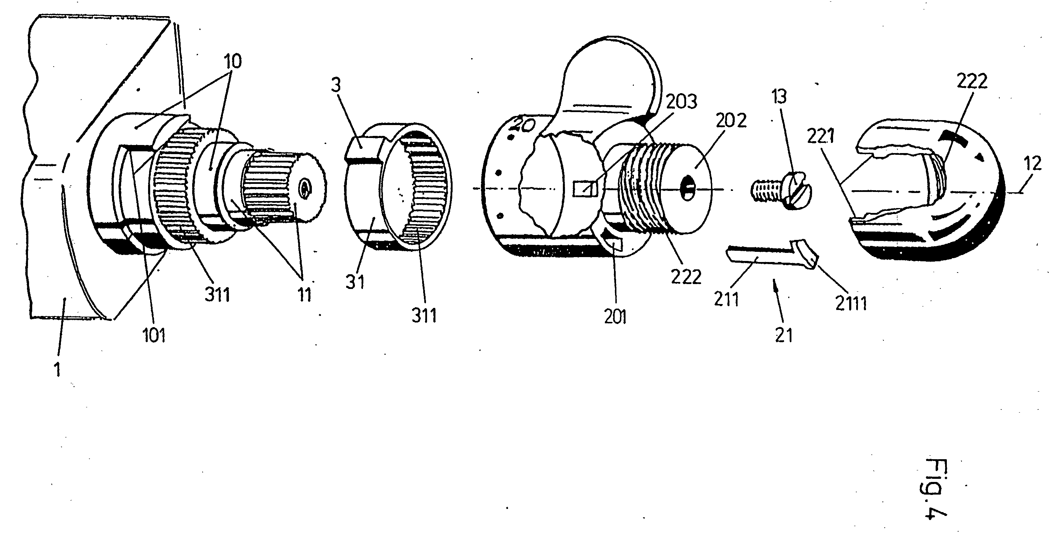

Der Einfachheit halber sind bei den Ausführungsbeispielen in der Zeichnung gleiche oder entsprechende Elemente mit jeweils gleichen Bezugszeichen versehen. Bei dem in der Zeichnung Fig. 1 bis 4 dargestellten Ausführungsbeispiel ist ein Stellgriff 2 für die Temperatureinstellung an einem Armaturenkörper 1 eines Mischventils dargestellt. Das Mischventil ist in Form einer Kartusche in dem Armaturenkörper 1 angeordnet und kann als Steuereinrichtung oder als thermostatgeregeltes Mischventil ausgebildet sein, wobei aus dem Armaturenkörper 1 ein Ventilgehäuse 10 vorkragt, aus dem koaxial eine Ventilspindel 11 herausgeführt ist, wie es insbesondere aus Fig. 4 zu entnehmen ist. Auf einer gestuften Mantelfläche des Ventilgehäuses 10 ist eine Verzahnung 311 ausgebildet, auf die ein Anschlag 3 mit einem Ringelement 31 mit einer entsprechenden Verzahnung drehfest aufsteckbar ist. Auf dem vorstehenden Ende der Ventilspindel 11 ist mittels Verzahnung ein Griffstück 20 drehfest aufsteckbar und mit einer Schraube 13 in der Stecklage sicherbar. Das hülsenförmige Griffstück 20 weist dabei einen an der Innenwandung vorstehenden Festarischlag 203 auf, der mit einem, am Ventilgehäuse 10 ausgebildeten Anschlag 101 zusammenwirkt und den maximal möglichen Drehwinkel des Griffstücks 20 in seiner Stecklage begrenzt.
Das Griffstück 20 trägt an seiner äußeren Stirnseite einen vorstehenden, im Durchmesser verkleinerten Ansatz, auf dessen Mantelfläche ein Gewinde 222 ausgebildet ist. In der stirnseitigen Ringfläche zwischen dem Mantel des Ansatzes 202 und dem Mantel des Griffstücks 20 ist eine Öffnung 201 ausgebildet. In diese Öffnung ist ein lösbarer Anschlag 21 in Form einer Anschlaglasche 211, die am äußeren Endbereich ein Querstück 2111 hat, einsteckbar. Das Querstück 2111 ist bogenförmig ausgebildet und so dimensioniert, daß es die Eintauchtiefe der Anschlaglasche 211 in die Öffnung 201 begrenzt. Auf den Ansatz 202 ist ein äußerer Teil 22 in Form einer Kappe 220 mit entsprechendem Gewinde 222 aufschraubbar. Hierbei weist die Stirnkante, mit der die Kappe 220 an dem Griffstück 20 anliegt, eine ringförmige Aussenkung 221 auf, die derart gestaltet ist, daß die Kappe 220 am Außenrand dicht an der Stirnseite des Griffstücks 20 anliegt, gleichzeitig aber das vorstehende bogenförmige Querstück 2111 aufnimmt und in der Stecklage axial sichert.
Zur kostengünstigen Herstellung können zweckmäßig die Kappe 220, das Griffstück 20, der lösbare Anschlag 21 sowie das Ringelement 31 mit dem Anschlag 3 aus Kunststoff im Spritzgußverfahren hergestellt sein.

Der Stellgriff hat folgende Funktionsweise:
Eine Temperaturerhöhung des Mischwassers kann mit dem in Fig. 2 gezeigten Stellgriff'2 durch eine Drehung bewerkstelligt werden. Mit dem lösbaren Anschlag 21 ist der Drehwinkel in diesem Falle auf ein Bogenstück X zum Anschlag 3 auf dem Ringelement 31 begrenzt. Wird nun der lösbare Anschlag 21 aus der Öffnung 201 des Griffstücks 20 entfernt, so wird damit die Drehwinkelbegrenzung entriegelt und ein Bogenstück Y zur Einstellung der maximalen Wassertemperatur freigegeben. Durch die Ausbildung des Anschlags 3 auf einem Ringelement 31, welches durch die Verzahnung 311 feingestuft, in verschiedenen Drehstellungen auf das Ventilgehäuse 10 aufsteckbar ist, kann die Temperaturbegrenzung mit dem lösbaren Anschlag wahlweise eingestellt werden. Die Bogenlänge X wird damit variabel.

Der vorstehend beschriebene Stellgriff kann in gleicher Weise für ein Mengenregulierventil, z. B. ein Drehschieberventil mit Keramikscheiben, eingesetzt werden. Mit dem lösbaren Anschlag wird dann über das Bogenstück X die Durchströmmenge pro Zeiteinheit durch das Ventil begrenzt.

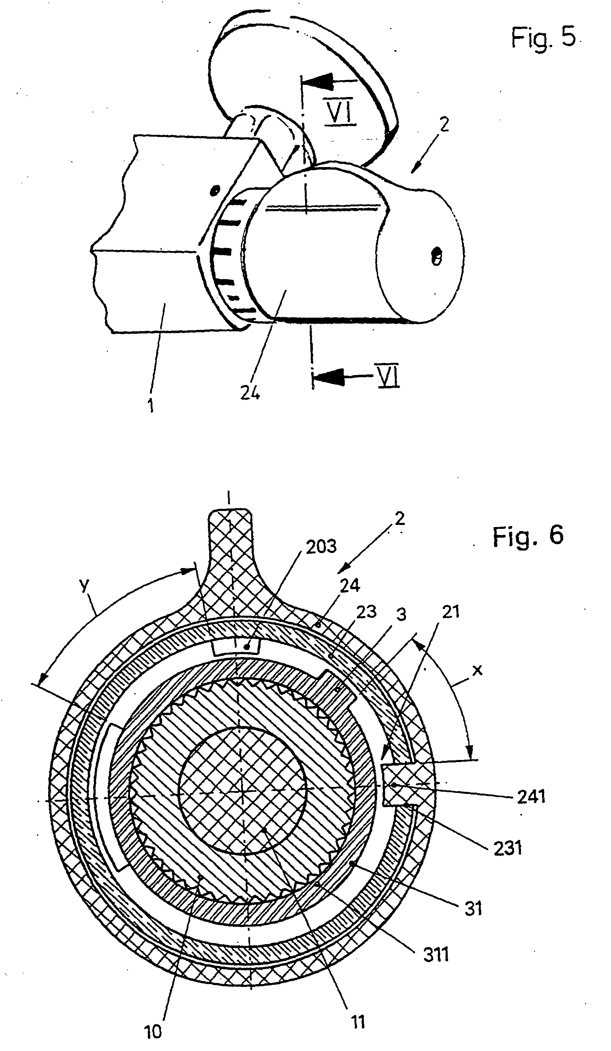

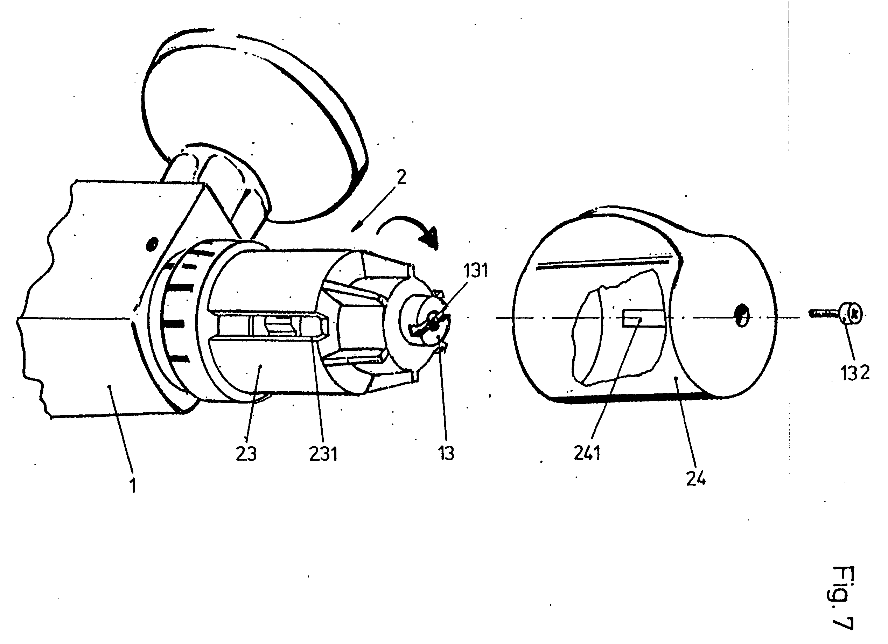

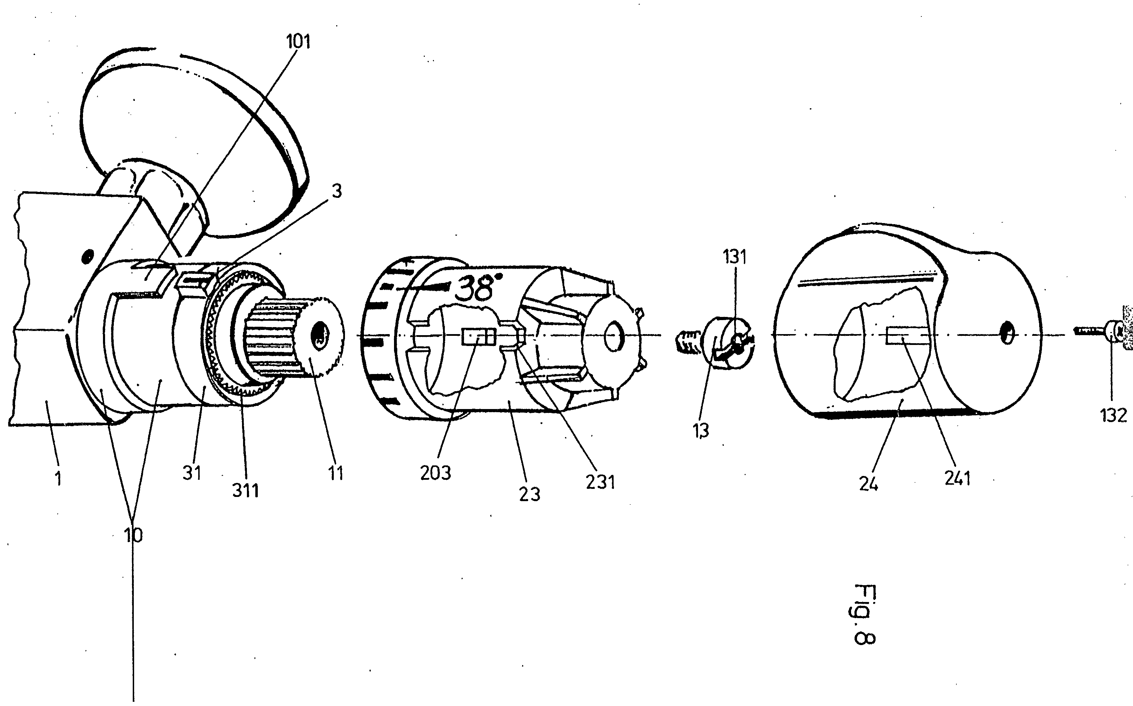

Das in den Fig. 5 bis 8 dargestellte Ausführungsbeispiel eines Stellgriffs unterscheidet sich im wesentlichen zu dem vorstehend aufgeführten Ausführungsbeispiel dadurch, daß das Griffstück 23 mit dem am äußeren Teil 24 als zwei aufeinander geschachtelt angeordnete Hülsen vorgesehen sind. Koaxial zur Mittelachse 12 des vorstehenden Ventilgehäuses 10 ist als innere Hülse das Griffstück 23 mittels Riefenverzahnung auf den vorstehenden Endbereich der Ventilspindel 11 befestigbar, wobei die Axialsicherung mit einer Schraube 13 erfolgt. Das Griffstück 23 trägt an der Innenwandung einen Festanschlag 203, der mit einem entsprechenden Anschlag 101 an dem Ventilgehäuse 10 zusammenwirkt. Außerdem weist das Griffstück 23 einen parallel zur Mittelachse 12 verlaufenden Längsschlitz 231 auf. Ein derart zusammengefügter Stellgriff 2 ist in Fig. 7 dargestellt. In diesem Zustand kann mit dem Griffstück 23 der gesamte Drehwinkel des Stellgriffs 2 benutzt werden. Auf dem Griffstück 23 kann der äußere Teil 24 axial aufgeschoben werden und mit einer Innensechskantschraube 132, die in ein Innengewinde 131 der Schraube 13 eindrehbar ist, in der Stecklage gesichert werden. Alternativ kann auch der äußere Teil mittels Schnappverbindung auf dem Griffstück axial in der Stecklage gesichert werden. Beim Aufschieben des äußeren Teils 24 gelangt hierbei ein radial nach innen vorstehender, parallel zur Mittelachse 12 angeordneter Anschlagwulst 241 in den Längsschlitz 231. Der Anschlagwulst 241 ist in Fig. 7 und 8 um 180° verdreht gezeichnet.
Wie es insbesondere aus Fig. 6 ersichtlich ist, wird der Drehwinkel des Stellgriffs 2 von dem Anschlagwulst 241 und dem Anschlag 3 auf das Bogenstück X begrenzt. Nach dem Entfernen des äußeren Teils 24 von dem Stellgriff 2 kann mit dem Griffstück 23 der gesamtmögliche Drehwinkel über das Bogenstück Y eingestellt werden.
Zweckmäßig werden hierbei wenigstens das Griffstück 23 mit dem äußeren Teil 24 und das Ringelement 31 aus Kunststoff hergestellt.
Durch die Verzahnung 311 kann der Anschlag 3 mit dem Ringelement 31 in verschiedenen Drehstellungen auf das Ventilgehäuse 10 aufgesteckt werden, so daß der begrenzte Drehwinkel über das Bogenstück X variabel eingestellt werden kann.
Der vorstehend beschriebene Stellgriff kann sowohl für die Einstellung einer Mischwassertemperatur bei einem Mischventil als auch bei einem Mengenregulierventil zur Begrenzung der Durchflußmenge pro Zeiteinheit eingesetzt werden.

## Patentansprüche

1. Wasserventil für den Sanitärbereich mit einem Stellgriff (2), der an einer aus einem Ventilgehäuse (10) herausgeführten, drehbaren Ventilspindel (11) befestigt ist, und der einen Festanschlag (203) aufweist, welcher mit wenigstens einem, an dem Ventilgehäuse (10) angeordneten Anschlag (101) zusammenwirkt, wobei am Stellgriff (2) ein weiterer, nach außen verdeckt angeordneter und aus seiner Anschlagposition lösbarer Anschlag (21) vorgesehen ist, **dadurch gekennzeichnet, daß** der Stellgriff (2) ein Griffstück (20) und einen äußeren Teil (22) aufweist; und daß der lösbare Anschlag (21):
- als Anschlaglasche (211) ausgebildet ist, die in einer, an der Stirnseite des Griffstückes (20) exzentrisch vorgesehenen Öffnung (201) angeordnet ist,
- mit einem weiteren Anschlag (3) am Ventilgehäuse (10) zusammenwirkt, und
- in der Stecklage vom äußeren Teil (22) des Stellgriffes (2) derart sicherbar ist, daß er erst nach dem Entfernen des äußeren Teils (22) aus seinem Funktionsbereich entfernbar ist.

2. Wasserventil für den Sanitärbereich mit einem Stellgriff (2), der an einer aus einem Ventilgehäuse (10) herausgeführten, drehbaren Ventilspindel (11) befestigt ist, und der einen Festanschlag (203) aufweist, welcher mit wenigstens einem, an dem Ventilgehäuse (10) angeordneten Anschlag (101) zusammenwirkt, wobei am Stellgriff (2) ein weiterer, nach außen verdeckt angeordneter und aus seiner Anschlagposition lösbarer Anschlag (241) vorgesehen ist, **dadurch gekennzeichnet, daß** der Stellgriff (2) ein Griffstück (23) und einen äußeren Teil (24) in Form von zwei ineinander geschachtelten Hülsen aufweist, wobei:
- die innere Hülse als Griffstück (23) mit der Ventilspindel (11) verbunden ist und einen Längsschlitz (231) aufweist,
- durch diesen Längsschlitz (231) ein an der Innenwandung der äußeren Hülse (24) ausgebildeter, parallel zu deren Mittelachse verlaufender Anschlagwulst als lösbarer Anschlag (241) in der Stecklage radial nach innen hindurchgreift, derart, daß die äußere Hülse (24) in der Stecklage drehfest mit dem Griffstück (23) verbunden ist und der lösbare Anschlag (241) mit einem weiteren Anschlag (3) am Ventilgehäuse (10) zusammenwirkt, und wobei
- der lösbare Anschlag (241) erst mit dem Entfernen der äußeren Hülse (24) aus seinem Funktionsbereich entfernbar ist.

3. Wasserventil nach Anspruch 1, **dadurch gekennzeichnet, daß** das Griffstück (20) einen vorstehenden Ansatz (202) trägt, auf dem eine Kappe (220) als äußerer Teil (22) befestigbar ist, mit der der lösbare Anschlag (21) in der Steckposition gesichert ist.

4. Wasserventil nach Anspruch 1 oder 3, **dadurch gekennzeichnet, daß** die Anschlaglasche (211) am äußeren Endbereich ein bogenartiges, sich über den Querschnitt der Öffnung (201) hinaus erstreckendes Querstück (2111) zur Anlage an eine Stirnwand des Griffstücks (20) trägt, wobei der äußere Teil (22) eine entsprechende ringförmige Aussenkung (221) aufweist, von der das Querstück (2111) in der Stecklage aufgenommen ist.

5. Wasserventil nach wenigstens einem der vorhergehenden Ansprüche, **dadurch gekennzeichnet, daß** der äußere Teil (22) mittels Gewinde (222) an dem Griffstück (20) befestigbar ist.

6. Wasserventil nach Anspruch 2, **dadurch gekennzeichnet, daß** das Griffstück (23) mit einer auf der Mittelachse (12) angeordneten Schraube (13) axial auf der Ventilspindel (11) in der Stecklage gesichert ist, wobei die Schraube (13) außerdem mit einer Halterung für das äußere Teil (24) versehen ist.

7. Wasserventil nach Anspruch 6, **dadurch gekennzeichnet, daß** die Schraube (13) ein koaxiales Innengewinde (131) aufweist, in die eine Innensechskantschraube (132) zur axialen Sicherung des äußeren Teils (24) einschraubbar ist.

8. Wasserventil nach wenigstens einem der vorhergehenden Ansprüche, **dadurch gekennzeichnet, daß** wenigstens der äußere Teil (22,24) mittels Schnappverbindung axial in der Stecklage gesichert ist.

9. Wasserventil nach wenigstens einem der vorhergehenden Ansprüche, **dadurch gekennzeichnet, daß** der am Ventilgehäuse (10) ausgebildete weitere Anschlag (3) an einem Ringelement (31) angeordnet ist, welches mittels einer Verzahnung (311) in verschiedenen Drehstellungen auf das Ventilgehäuse (10) steckbar ist.

10. Wasserventil nach wenigstens einem der vorhergehenden Ansprüche, **dadurch gekennzeichnet, daß** wenigstens das Griffstück (20,23) und der äußere Teil (22,24) und/oder das Ringelement (31) mit dem weiteren Anschlag (3) aus Kunststoff im Spritzgußverfahren hergestellt sind.

11. Wasserventil nach wenigstens einem der vorhergehenden Ansprüche, **dadurch gekennzeichnet, daß** das Griffstück (20,23) an einer Temperatureinstellvorrichtung für ein Kalt- und Warmwassermischventil eingesetzt ist.

12. Wasserventil nach wenigstens einem der Ansprüche 1 bis 10, **dadurch gekennzeichnet, daß** das Griffstück (20,23) an einem Mengenregulier- und/oder Absperrventil eingesetzt ist.

## Claims

1. Water valve for use in sanitary engineering having an adjusting grip (2), which is secured to a rotatable valve spindle (11) lead out of a valve housing (10) and which has a fixed stop member (203) that co-operates with at least one stop member (101) arranged on the valve housing (10), a further stop member (21) arranged so that it is hidden from external view and releasable from its stop position being provided on the adjusting grip (2), **characterised in that** the adjusting grip (2) comprises a grip part (20) and an outer part (22); and that the releasable stop member (21):
- is in the form of a stop tongue (211) that is arranged in an opening (201) provided eccentrically on the front end face of the grip part (20),
- co-operates with a further stop member (3) on the valve housing (10), and
- in the inserted position of the outer part (22) of the adjusting grip (2) is lockable such that it is removable from its zone of operation only after removal of the outer part (22).

2. A water valve for use in sanitary engineering having an adjusting grip (2), which is secured to a rotatable valve spindle (11) lead out of a valve housing (10) and which has a fixed stop member (203) that co-operates with at least one stop member (101) arranged on the valve housing (10), a further stop member (241) arranged so that it is hidden from external view and releasable from its stop position being provided on the adjusting grip (2), **characterised in that** the adjusting grip (2) comprises a grip part (23) and an outer part (24) in the form of two nested sleeves; wherein:
- the inner sleeve is connected as grip part (23) to the valve spindle (11) and has a longitudinal slot (231),
- a stop projection as releasable stop member (241) constructed on the inner wall of the outer sleeve (24) and running parallel to the centre line thereof engages in the inserted position radially inwardly through this longitudinal slot (231) in such a way that the outer sleeve (24) in the inserted position is non-rotatably connected with the grip part (23) and the releasable stop member (241) co-operates with a further stop member (3) on the valve housing (10), and wherein
- the releasable stop member (241) is removable from its zone of operation only on removal of the outer sleeve (24).

3. Water valve according to claim 1, **characterised in that** the grip part (20) carries a projecting extension (202) on which a cap (220) is securable as outer part (22), with which cap the releasable stop member (21) is locked in the inserted position.

4. Water valve according to claim 1 or 3, **characterised in that** the stop tongue (211) carries at its outer end region a curved transverse member (2111) extending beyond the cross-section of the opening (201) for engagement against an end wall of the grip part (20), the outer part (22) having a corresponding annular recess (221) by which the transverse member (2111) is received in the inserted position.

5. Water valve according to at least one of the preceding claims, **characterised in that** the outer part (22) is securable by means of a screw thread (222) on the grip part (20).

6. Water valve according to claim 2, **characterised in that** the grip part (23) is locked in the inserted position axially on the valve spindle (11) with a screw (13) arranged on the centre line (12), the screw (13) additionally being provided with a retaining means for the outer part (24).

7. Water valve according to claim 6, **characterised in that** the screw (13) has a coaxial internal thread (131) into which a hexagon socket screw (132) can be screwed to lock the outer part (24) axially.

8. Water valve according to at least one of the preceding claims, **characterised in that** at least the outer part (22, 24) is locked axially in the inserted position by means of a snap-fit connection.

9. Water valve according to at least one of the preceding claims, **characterised in that** the further stop member (3) constructed on the valve housing (10) is arranged on an annular element (31) that can be pushed onto the valve housing (10) in different rotated positions by means of a toothing (311).

10. Water valve according to at least one of the preceding claims, **characterised in that** at least the grip part (20, 23) and the outer part (22, 24) and/or the annular element (31) having the further stop member (3) are manufactured from plastics material by an injection-moulding process.

11. Water valve according to at least one of the preceding claims, **characterised in that** the grip part (20,23) is used on a temperature-adjusting device for a cold and hot water-mixing valve.

12. Water valve according to at least one of claims 1 to 10, **characterised in that** the grip part (20, 23) is used on a volume-regulating and/or shut-off valve.

## Revendications

1. Robinet à eau pour le domaine sanitaire comportant une poignée de réglage (2) fixée à une broche de robinet (11), rotative, sortant du boîtier (10) du robinet et ayant une butée fixe (203) coopérant avec au moins une butée (101) prévue sur le boîtier (10), la poignée de réglage (2) comportant une autre butée (21), escamotable de sa position de butée et installée de manière cachée de l'extérieur,
**caractérisé en ce que**
la poignée de réglage (2) comporte une pièce de préhension (20) et une partie extérieure (22) et
la butée escamotable (21) :
* est réalisée en forme de patte de butée (211) logée dans une ouverture (201) excentrée prévue dans la face frontale de la pièce de préhension (20),
* coopère avec une autre butée (3) du boîtier de robinet (10), et
- peut se bloquer en position d'engagement par la partie extérieure (22) de la poignée de réglage (2) pour ne pouvoir être enlevée de sa zone de fonctionnement qu'après enlèvement de la partie extérieure (22).

2. Robinet à eau pour le domaine sanitaire comportant une poignée de réglage (2) fixée à une broche de robinet (11) rotative, sortant du boîtier (10) du robinet et ayant une butée fixe (203) coopérant avec au moins une butée (101) prévue sur le boîtier (10), la poignée de réglage (2) comportant une autre butée (241), amovible de sa position de butée" et cachée vis-à-vis de l'extérieur,
**caractérisé en ce que**
la poignée de réglage (2) se compose d'une pièce de préhension (23) et d'une partie extérieure (24) sous la forme de deux manchons engagés l'un dans l'autre, et
- le manchon intérieur constituant une pièce de préhension (23) est relié à la broche (11) et au robinet et comporte une fente longitudinale (231),
- un bourrelet de butée traversant cette fente longitudinale (231), réalisé sur la paroi intérieure du manchon extérieur (24) et parallèle à son axe, forme une butée amovible (241) en venant radialement en saillie vers l'intérieur en position engagée, de façon que le manchon extérieur (24) soit relié solidairement en rotation à la poignée (23) en position engagée et que la butée amovible (241) coopère avec une autre butée (3) du boîtier de robinet (10), et
- la butée amovible (241) ne peut s'enlever de sa zone de fonctionnement qu'après éloignement du manchon extérieur (24).

3. Robinet selon la revendication 1,
**caractérisé en ce que**
la poignée (20) comporte un prolongement (202) en saillie sur lequel se fixe un capuchon (220) comme pièce extérieure (22) bloquant la butée amovible (21) en position engagée.

4. Robinet selon l'une quelconque des revendications 1 ou 3,
**caractérisé en ce que**
la patte de butée (211) comporte, à son extrémité extérieure, une traverse (2111) en forme d'arc de cercle qui déborde de la section d'ouverture (201) pour venir en appui contre la paroi frontale de la poignée (20), la partie extérieure (22) ayant une cavité (221) annulaire correspondante pour recevoir la traverse (2111) en position engagée.

5. Robinet selon l'une quelconque des revendications précédentes,
**caractérisé en ce que**
la partie extérieure (22) est fixée par un filetage (222) à la pièce de préhension (20).

6. Robinet selon la revendication 2,
**caractérisé en ce que**
la pièce de préhension (23) est bloquée axialement en position engagée sur la broche (11) du robinet par une vis (13) placée dans l'axe (12), la vis (13) étant en outre munie d'un support pour la partie extérieure (24).

7. Robinet selon la revendication 6,
**caractérisé en ce que**
la vis (13) comporte un filetage intérieur coaxial (131) dans lequel se place une vis à six pans intérieure (132) pour le blocage axial de la partie extérieure (24).

8. Robinet selon au moins l'une quelconque des revendications précédentes.
**caractérisé en ce qu'**
au moins la partie extérieure (22, 24) est fixée axialement en position engagée par une liaison par enclipsage.

9. Robinet selon au moins l'une quelconque des revendications précédentes,
**caractérisé en ce que**
l'autre butée (3) réalisée sur le boîtier (10) du robinet est prévue sur un élément annulaire (31) qui peut s'engager sur le boîtier (10) dans différentes positions de rotation par une denturé intérieure (311).

10. Robinet selon au moins l'une quelconque des revendications précédentes,
**caractérisé en ce qu'**
au moins la poignée (20, 23) et la partie extérieure (22, 24) et/ou l'élément annulaire (31) sont réalisés avec une autre butée (3) en matière plastique par injection.

11. Robinet selon au moins l'une quelconque des revendications précédentes,
**caractérisé en ce que**
la poignée (20, 23) est installée sur le dispositif de réglage de la température d'un mitigeur d'eau froide et d'eau chaude.

12. Robinet selon l'une quelconque des revendications 1 à 10,
**caractérisé en ce que**
la poignée (20, 23) équipe un robinet d'arrêt et/ou de régulation de débit.
